# EUROPÄISCHE PATENTSCHRIFT

(11) **EP 1 834 871 B1**
(45) Veröffentlichungstag und Bekanntmachung des Hinweises auf die Patenterteilung: **24.09.2008**
(21) Anmeldenummer: 07004742.8
(22) Anmeldetag: 08.03.2007
(51) Int. Cl.: B64C 1/00, B64C 1/12, F16B 5/06

(54) **Anordnung zur lösbaren Befestigung von Bauteilen an einer Decke oder Wand**
Assembly for detachable mounting of components on a ceiling or wall
Agencement destiné à la fixation amovible de composants sur un toit ou un mur

(30) Priorität: 13.03.2006 DE 202006004081 U
(43) Veröffentlichungstag der Anmeldung: 19.09.2007
(73) Patentinhaber: S-Fasteners GmbH, 71106 Magstadt (DE)
(72) Erfinder: Homner, Bernhard, 75 365 Calw-Stammeheim (DE)
(74) Vertreter: Blutke, Klaus Wilhelm

(56) Entgegenhaltungen:
- DE-U1- 20 218 300
- DE-U1- 20 218 302
- DE-U1- 29 920 497
- DE-U1- 29 920 499

## Beschreibung

Die Erfindung betrifft eine Anordnung zur lösbaren Befestigung von Bauteilen an einer Decke oder Wand, vorzugsweise eine Befestigungsanordnung für Decken- oder Wandverkleidungen, insbesondere für Flugzeuge.

Es sind eine Vielzahl von Verbindungsanordnungen mit einem Bolzen für Bauteile bekannt.

In der DB 202 18 302 U1 ist eine Zylinderbolzen-Führungsbuchse mit Bolzensicherung beschrieben. Diese besteht aus einem Hohlzylinder-Teil und einem mit diesem fest verbundenen nach auswärts weisenden Auflage-Randteil mit einer Bolzen-Durchtrittsöffnung. Der Durchmesser der Bolzen-Durchtrittsöffnung ist kleiner als der Innendurchmesser des Hohlzylinder-Teils. Mindestens das Auflage-Randteil besteht aus elastischen Material. Die Bolzen-Durchtrittsöffnung ist beim Hindurchführen eines gedachten Bolzen-Abschnittes elastisch aufweitbar.

In der DE 299 20 499 U1 ist eine schwingungsdämpfende Verbindungsanordnung zum lösbaren Verbinden zweier mit aufeinander ausgerichteten Öffnungen versehener Bauteile beschrieben. In einer Bohrung des einen zu verbindenden Teils ist ein in einer Hülse mit Hülsenkopf geführter Bolzen vorgesehen; am Bolzenende ist ein Verriegelungsteil befestigt, das sich beim Eindrücken des Bolzens in einer mit dem anderen Teil in Verbindung stehender Blattfederanordnung verhakt und bei dem ein auf dem Bolzen bis zu einer Schulter verschiebbares Entriegelungsteil bei weiterem Eindrücken des Bolzens die Blattfederanordnung zum Lösen der Verbindung spreizt. Die Hülse ist in einem Schwingungsdämpferring aus elastischem Material angeordnet, auf dem das mit dem Hülsenkopf verbundene erste Bauteil aufliegt. Der Schwingungsdämpferring weist eine konzentrisch zu seiner Achse angeordnete periphere Nut auf zur Aufnahme des Randes der Öffnung im zweiten Bauteil. Die Blattfederanordnung ist mit dem Schwingungsdämpferring verbunden. An der den Bauteilen abgewandten Seite des Schwingungsdämpferringes sind anschlagbildende Mittel bezüglich der Öffnung des zweiten Bauteils vorgesehen.

In der DB 299 20 497 ist eine schwingungsdämpfende Verbindungsanordnung zum lösbaren Verbinden zweier mit aufeinander ausgerichteten Öffnungen versehener Bauteile beschrieben. Diese besteht aus einem Dreh-Bolzen, einer Halte-Feder und einem Schwingungsdämpferring.
Der Dreh-Bolzen ist an seinem Ende mit zwei seitlichen Kerben versehen, in welche die Enden der Haltefeder eingreifen. Der Schwingungsdämpferring weist eine periphere Nut auf, welche ein Bauteil trägt. Der Dreh-Bolzen ist in einer Buchse geführt, welche in der Öffnung des Schwingungsdämpferringes angeordnet ist. Auf dem Dreh-Bolzen ist in einer Ausführungsform ein verschieblicher Ring angeordnet, welcher bei geschlossener Verbindungsanordnung zwischen der Unterseite des Schwingungsdämpferringes und der Oberseite des zweiten Bauteils liegt. In einer anderen Ausführungsform ist über dem Schwingungedämpferring das erste Bauteil angeordnet und die Haltefeder auf der den Bauteilen abgewandten Seite des Schwingungsdämpferringen mit dem Schwingungedämpferring oder der Buchse verbunden.

In der DE 202 18 300 U1 ist eine Verbindungsanordnung zum lösbaren Verbinden zweier mit aufeinander ausgerichteten Öffnungen versehener Bauteile beschrieben. Diese besteht aus einem Halte-Drehbolzen mit Außengewinde und einem mit dem zweiten Bauteil verbundenen Bolzenverbinder. Der Bolzenverbinder weist ein Gehäuse auf mit einem sich zur Öffnung hin verjüngenden Innenkonus auf.
In dem Gehäuse sind zwei schalenförmige Gewindemutter-Segmente angeordnet, deren Außen-Mantel jeweils eine dem Innenkonus angepaßte Schräge aufweisen. Die Gewindemutter-Segmente sind mit ihrem Außenmantel auf dem Innenkonus in Richtung der Gehäuseöffnung oder entgegengesetzt dazu verschiebbar. Sie werden durch eine Spiraldruckfeder in Richtung der Gehäuseöffnung gedrückt. Der Halte-Drehbolzen kann zwischen die verschiebbaren Gewindemutter-Segmente gegen die Federkraft hineingedrückt werden, wobei seine Gewindegänge in die der Gewindemutter-Segmente einrasten. Durch Drehung des Halte-Drehbolzens kann dieser mit dem Gewinde der Gewindemutter-Segmente verschraubt werden.

Es ist Aufgabe der Erfindung, eine neuartige Befestigungsanordnung vorzusehen, welche leicht und sicher zu handhaben ist, welche einfach und billig herzustellen ist und welche auch ein geringes Gewicht und ein geringes Bauvolumen aufweisen kann.

Diese Aufgabe der Erfindung wird durch die im kennzeichnenden Teil des Anspruches 1 genannten Merkmale gelöst.
Vorteilhafte Weiterbildungen der Erfindung sind in den Ünteransprüchen gekennzeichnet.

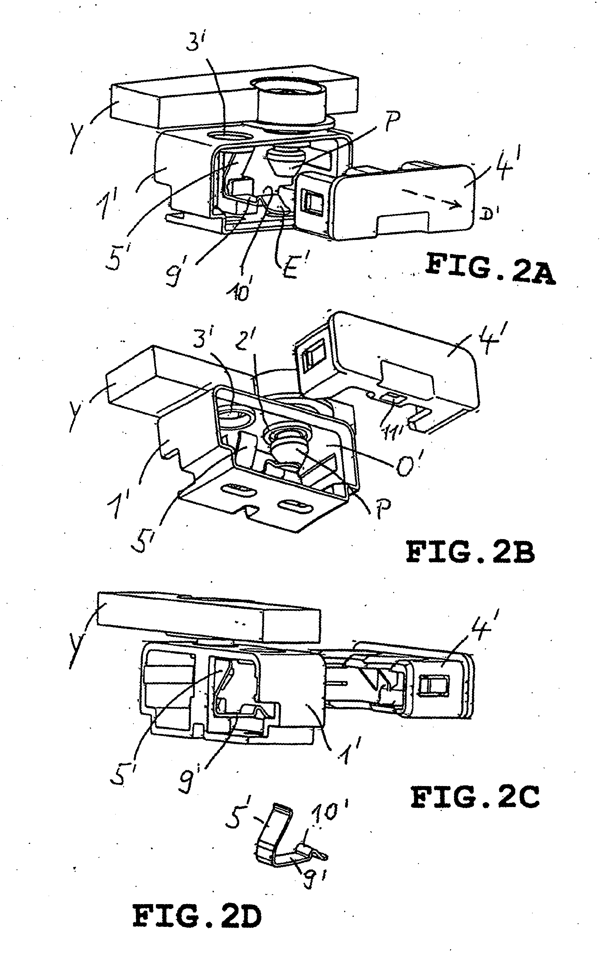

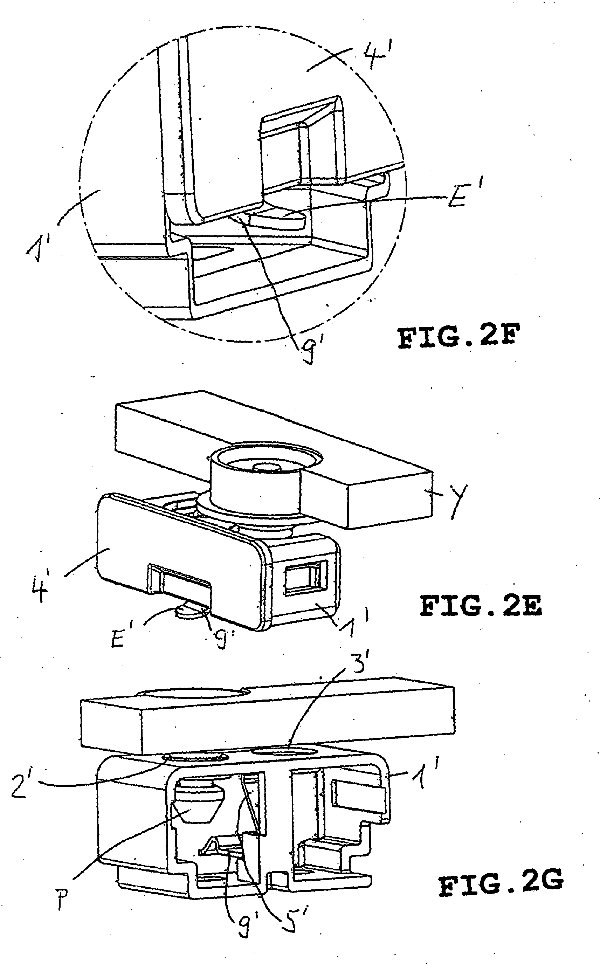

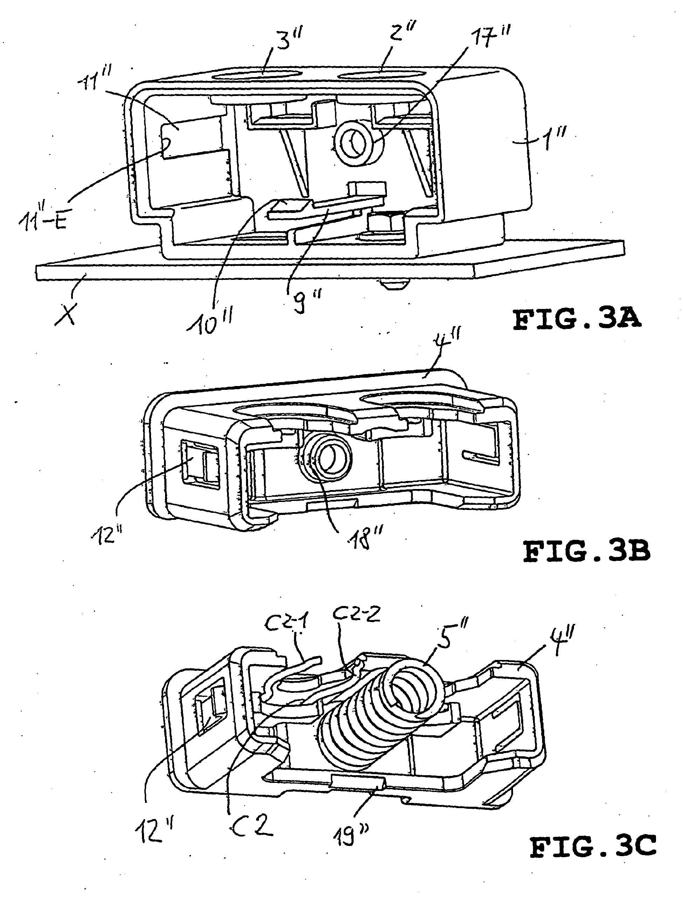

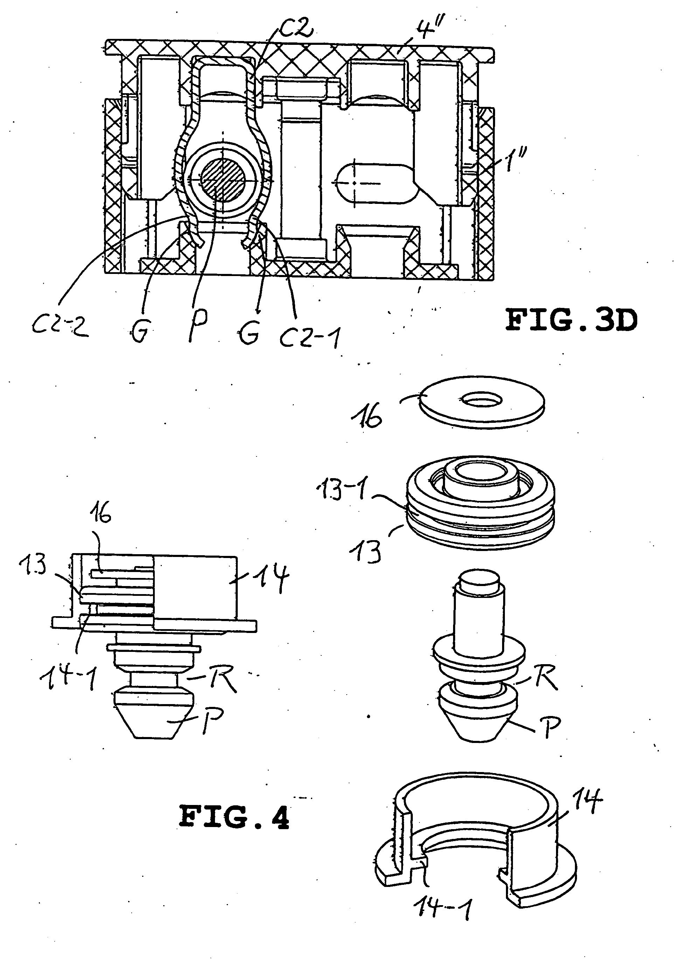

Ausführungsbeispiele der Erfindung sind in den Zeichnungen dargestellt und werden im folgenden näher beschrieben.
Es zeigen:

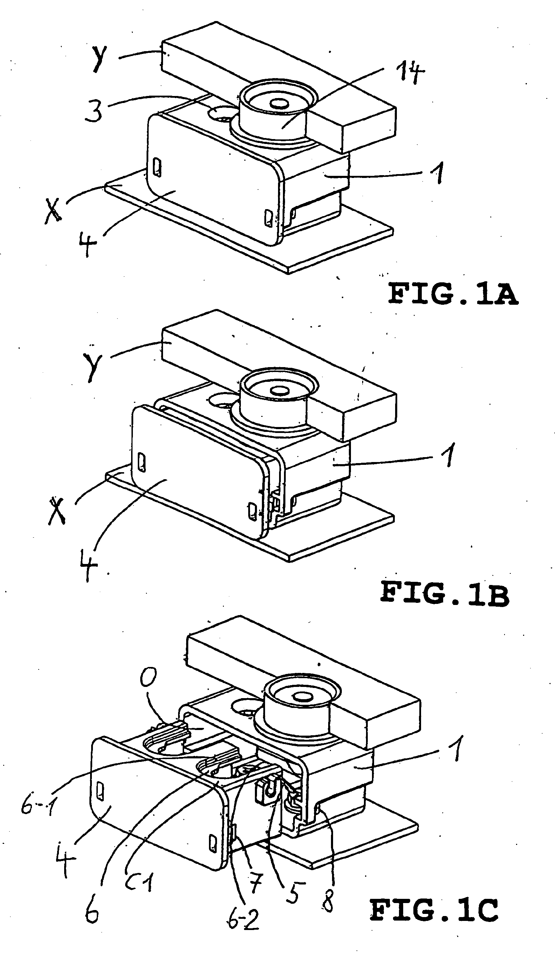

FIG.1A eine isometrische Darstellung einer ersten Ausführungsform der erfindungsgemäßen Befestigungs-Anordnung mit einem Aufnahme-Gehäuse und einem Schuh-Element , wobei das Schub-Element völlig in das Aufnahme-Gehäuse hineingeschoben ist;
FIG. 1B
   eine isometrische Darstellung der Anordnung gemäß FIG.1A, wobei das Schub-Element nur zum Teil in das Aufnahme-Gehäuse hineingeschoben ist;
FIG. 1C
   eine isometrische Darstellung der Anordnung gemäß FIG.1A bzw. FIG.1B, wobei das Schub-Element und das Aufnahme-Gehäuse getrennt gezeigt sind;
FIG. 1D
   eine isometrische Darstellung gemäß FIG.1C mit Blick auf die Rückseite des Aufnahme-Gehäuses mit Sicht auf den Haltebolzen;
FIG.1E
   eine isometrische Detail-Darstellung der Anordnung gemäß FIG. 1C mit Sicht auf die Rastverbindung des Schub-Elementes mit dem Aufnahme-Gehäuse und auf die Öffnungsfeder;
FIG.2A
   eine isometrische Darstellung einer zweiten Ausführungsform der erfindungsgemäßen Befestigungs-Anordnung mit einem Schub-Element und einem davon getrennt gezeigten Aufnahme-Gehäuse;
FIG.2B
   eine isometrische Darstellung der Anordnung gemäß FIG.2A mit Blick von vorn und schräg von unten in das Aufnahme-Gehäuse;
FIG.2C
   eine isometrische Darstellung der Anordnung gemäß FIG.2a bzw. FIG.2B mit Blick schräg von hinten in das Aufnahme-Gehäuse und das Schub-Element;
FIG.2D
   eine isometrische Einzel-Darstellung der zweischenkeligen Blattfeder gemäß der Anordnung in FIG.2A und FIG.2B;
FIG.2E
   eine isometrische Darstellung der Anordnung gemäß FIG.2A, wobei
   das Schub-Element völlig in das Aufnahme-Gehäuse hineingeschoben ist;
FIG. 2E
   eine isometrische Darstellung der zweiten Ausführungsform der erfindungsgemäßen Befestigungsanordnung, wobei das Schub-Element 4' völlig in das Aufnahme-Gehäuse 1' hineingeschoben ist;
FIG.2F
   eine isometrische Teildarstellung der Anordnung gemäß FIG. 2E mit Blick auf das manuell betätigbare Federzunge-Ende zum Lösen der Rastverbindung;
FIG. 2G
   eine isometrische Darstellung des Aufnahme-Gehäuses gemäß FIG. 2A mit Blick auf die Rückseite;
FIG. 3A
   eine isometrische Darstellung des Aufnahme-Gehäuses (mit Blick auf seine Vorderseite) für eine dritte Ausführungsform der erfindungsgemäßen Befestigungsanordnung;
FIG.3B
   eine isometrische Darstellung des Schub-Elementes (mit Blick auf seine Rückseite) für das Aufnahme-Gehäuse gemäß FIG.3A;
FIG.3C
   eine isometrische Darstellung des Schub-Elemntes (mit Blick auf seine Rückseite) gemäß FIG.3B unter Einbeziehung einer U förmigen Halte-Feder und einer Spiral-Druckfeder als Öffnungs-Feder;
FIG.3D
   eine Schnittdarstellung des teilweise in das Aufnahme-Gehäuse gemäß FIG.3A eingeführten Schuh-Elementes gemäß FIG. 3C mit Blick auf die U förmige Halte-Feder als Verbindungselement zum Haltebolzen.
FIG.6
   eine Schnittdarstellung des teilweise in das Aufnahmeeingeführten Schuh-Elementes analog zu FIG. 3D mit einer anders als in FIG. 3D angeordneten U förmigen Halte-Feder als Verbindungselement zum Haltebolzen.
FIG.4
   eine isometrische Teil-Schnittdarstellung einer Haltebolzen-Einsatzanordnung mit Schwingungsdämpferring zur Befestigung in einer Deckenbohrung;
FIG.5
   eine isometrische Darstellung einer Haltebolzen-Baugruppe mit Schwingungsdämpferring zur Befestigung in einer Deckenbohrung mit ringförmigen Innenvorsprung;

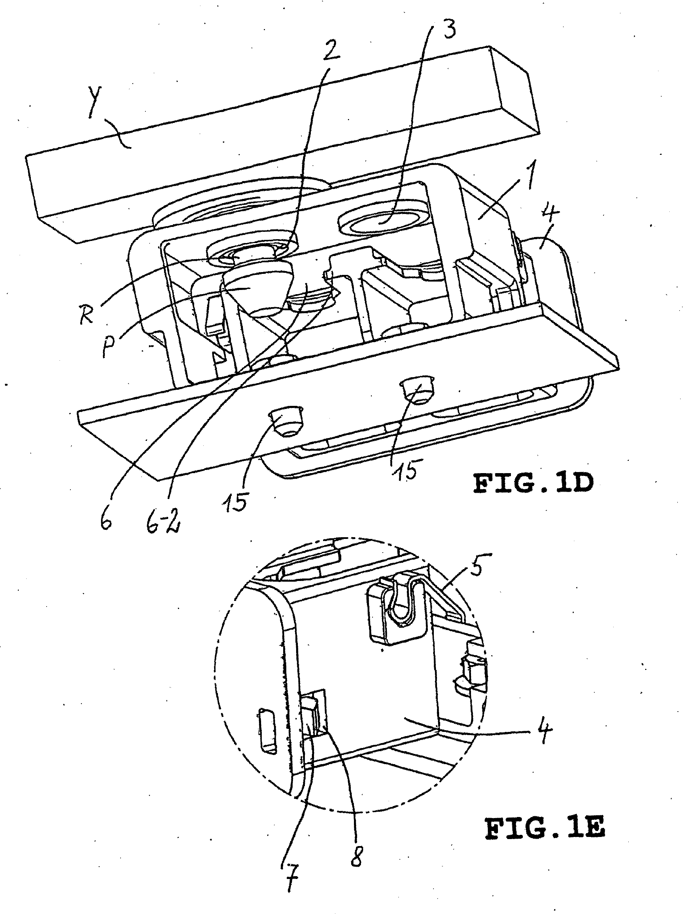

FIG.1 zeigt
eine isometrische Darstellung einer ersten Ausführungsform der erfindungsgemäßen Befestigungs-Anordnung zur lösbaren Befestigung eines Bauteils (X) an einer Decke (Y), bestehend aus einem Aufnahme-Gehäuse 1 und einem Schub-Element 4, wobei das Schub-Element 4 völlig in das Aufnahme-Gehäuse 1 hineingeschoben ist.
In der Decke (Y) ist ein aus dieser herausstehender Haltebolzen P befestigt (nähere Einzelheiten hierzu sind aus FIG.1D in Verbindung mit FIG.4 ersichtlich), welcher eine Aussparung R zum Eingreifen eines Verbindungselementes C1 (s. FIG. 1C) aufweist.
Ein Teil des Haltebolzens P mit der Aussparung R ragt durch eine Öffnung 2 (FIG.1D) in das Aufnahme-Gehäuse 1.
Im eingeschobenen Zustand des Schub-Elementes 4 in dem Aufnahme-Gehäuse 1 greifen die Ränder 6-1 und 6-2 des offenen Schlitzes 6 des Verbindungselementes C1 des Schub-Elementes 4 (s. FIG. 1C) in die konzentrische ringnutförmige Aussparung R des Haltebolzens P ein. Dadurch ist die Decke Y über den Haltebolzen P und die Aufnahme-Gehäuse/ Schub-Blement-Anordnung mit dem Bauteil X verbunden. Die Aussparung R kann auch durch seitliche gegenüberstehende Kerben im Haltebolzen gebildet werden.
Das Bauteil X, vorzugsweise ein Wand- oder Decken-Verkleidungsteil, ist auf beliebige Art und Weise mit dem Aufnahme-Gehäuse 1 verbindbar, z.B. durch eine Schraubverbindung 15 (FIG. 1D).
FIG. 1D zeigt
eine isometrische Darstellung gemäß FIG.1C mit Blick auf die Rückseite des Aufnahme-Gehäuses 1. Der in der Decke befestigte Haltebolzen P ragt in das Aufnahme-Gehäuse. Dort wird seine konzentrische Haltenut R mit dem Verbindungselement C1, d.h. mit den Rändern 6-2 und 6-1 (in FIG. 1D nicht sichtbar) des Schlitzes 6 des Schuh-Elementes 4 verbunden.

FIG. 4 zeigt
eine isometrische Teil-Schnittdarstellung einer Anordnung zur Befestigung des Haltebolzens P in der Decke, sowie eine Darstellung der Einzelteile dieser Anordnung.
Der Schaft des Haltebolzen P steckt in einem Schwingungsdämpferring 13 mit einer äußeren ringförmigen Aussparung 13-1, in welche der ringförmige Innen-Vorsprung 14-1 des hohlzylinderförmigen Einsatz-Elementes 14 ragt. An seinem oberen Ende ist der Haltebolzen P mit einer Haltescheibe 16 fest verbunden.
Das Einsatz-Element 14 wird fest mit der Decke verbunden, indem es in einem entsprechenden Deckenbohrloch verklebt wird.
Es wird darauf hingewiesen, daß auch beliebige andere Befestigungsmöglichkeiten des Haltebolzenz P in der Decke, mit oder ohne Schwingungsdämpfering, in Betracht kommen können.

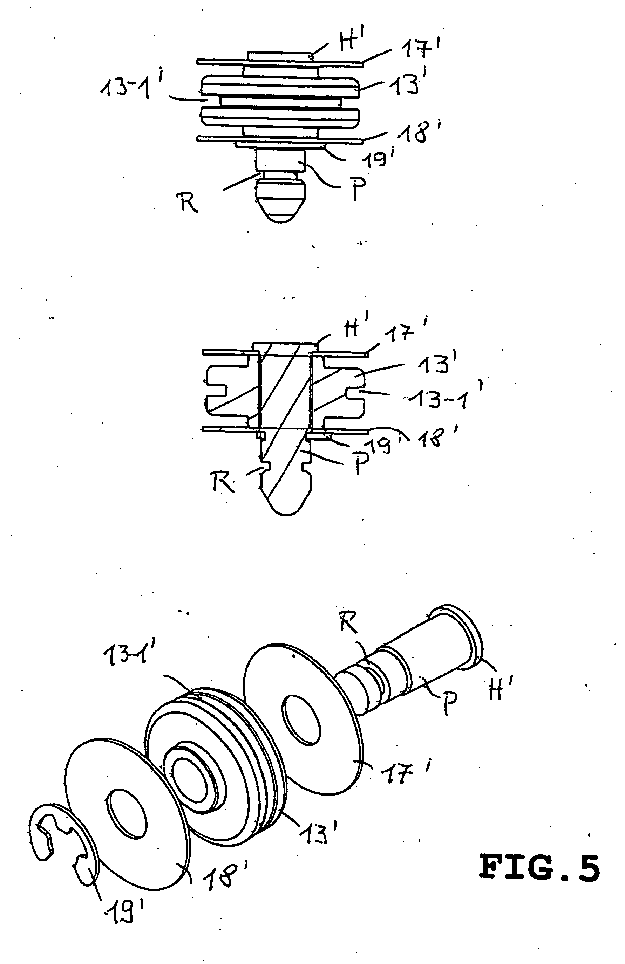

FIG.5 zeigt
eine isometrische Darstellung einer Haltebolzen-Baugruppe mit Schwingungsdämpferring zur Befestigung in einer Deckenbohrung mit ringförmigen Innenvorsprung.
Auf dem Haltebolzen P mit einem Bolzenkopf H' ist auf dem oberen Schaftbereich zwischen dem Bolzenkopf H' und einem auf dem Haltebolzen P anordnungsbaren Sicherungselement 19', vorzugsweise einer Sicherungsscheibe, ein Schwingungsdämpferring 13' mit einer oberen 17' und einer unteren 18' Haltescheibe angeordnet.
Der Schwingungsdämpferring 13' weist eine äußere konzentrische Ringnut 13-1' auf, in der ein gedachter ringförmiger Innenvorsprung einer in einer Decke oder Wandung befindlichen Bohrung zur Aufnahme des Schwingungsdämpferrings anordnungsbar ist.
Das aus dem Schwingungsdämpferring 13' herausstehende Ende des Haltebolzens P hat eine Aussparung R zum Einrasten eines gedachten Verbindungs-Elementes.

Das Schub-Elements 4 wird beim Einschieben in das Aufnahme-Gehäuse 1 entsprechend geführt, um die Verriegelung des Halte-Bolzens P an der Stelle seiner Aussparung R zu gewährleisten.

Sobald das Schub-Element 4 völlig in das Aufnahme-Gehäuse 1 geschoben wurde, wird es selbsttätig verriegelt. Zu diesem Zweck ist eine lösbare Rastverbindung zwischen Aufnahme-Gehäuse 1 und Schub-Element 4 vorgesehen, welche durch beidseits des Schub-Elementes 4 angeordnete federnder Rastnasen 7 realisiert ist , die in Durchgangsöffnungen 8 der Aufnahme-Gehäuse(1)-Wandungen einrasten.
Zum Lösen dieser Rastverbindung muß mittels eines Werkzeuges die Rastnase 7 in der Öffnung 8 nach innen gedrückt werden.
Um bei gelöster Rastverbindung ein selbsttätiges Herausschieben des Schub-Elementes 4 aus dem Aufnahme-Gehäuse 1 zu gewährleisten, sind beidseits des Schub-Elementes 4 Öffnungsfedern 5 vorgesehen.

Die Rastnasen können auch am Aufnahme-Gehäuse vorgesehen werden, um in entsprechende Aussparungen des Schubelementes einzugreifen.

FIG. 1E zeigt
eine isometrische Detail-Darstellung der Anordnung gemäß FIG. 1C mit Blick auf die Rastverbindung des Schub-Elementes 4 mit dem Aufnahme-Gehäuse 1 und auf die Öffnungsfeder 5.
Diese ist als Blattfeder ausgeführt , deren Federarm im eingeschobenen Zustand ein im Aufnahme-Gehäuse 1 angeordnetes Widerlager federkraftmäßig derart beaufschlagt, daß bei gelöster Rastverbindung das Schub-Elementes 4 aus dem Aufnahme-Gehäuse 1 herausgeschoben wird.
Das Herausschieben ist - wie später noch erläutert - begrenzt, um zu verhindern, daß sich das Schub-Element 4 völlig aus dem Aufnahme-Gehäuse 1 lösen kann.

FIG.2A zeigt
eine isometrische Darstellung einer zweiten Ausführungsform der erfindungsgemäßen Befestigungs-Anordnung mit einem Aufnahme-Gehäuse 1' und einem getrennt davon Schub-Element 4'.
Diese zweite Ausführungsform unterscheidet sich von der ersten Ausführungsform gemäß FIG.1A bis FIG. 1D bezüglich der Rastverbindung zwischen dem Aufnahme-Gehäuse 1' und dem Schub- Element 4' und der Öffnungsfeder.

Für die Rastverbindung zwischen Aufnahme-Gehäuse 1' und Schub- Element 4' ist eine im Aufnahme-Gehäuse 1' angeordnete Federzunge 9' aus Federstahl mit einer Rastnase 10' vorgesehen, welche im eingeschobenen Zustand in der Aussparung 11' des Schub-Elements 4' einrastet (s. FIG. 2A und 2B).

FIG.2B zeigt
isometrische Darstellung der Anordnung gemäß FIG.2A mit Blick von vorn und schräg von unten in das Aufnahme-Gehäuse.

Das freie Ende E' der Federzunge 9' ist zum Lösen der Rastverbindung für eine manuelle Betätigung in eingeschobenen Zustand zugänglich (s. auch FIG.2F).

FIG. 2F zeigt
eine isometrische Teildarstellung der Anordnung gemäß FIG. 2E mit Blick auf das manuell betätigbare Federzungen-Ende E' zum Lösen der Rastverbindung.
Durch Hinunterdrücken des Endes E' der Federzunge 9' wird die Rastverbindung gelöst, wobei die Rastnase 10' (FIG.2A) aus der Aussparung 11' (FIG.2B) bewegt wird.

Das Herausschieben des Schub-Elementes 4' aus dem Aufnahme-Gehäuse 1' bei gelöster Rastverbindung erfolgt durch die Öffnungsfeder 5'.

Die Federzunge 9' und die Öffnungsfeder 5' sind Teile einer gemeinsamen zweischenkeligen Blattfeder (5'/9'), deren einer Schenkel (9') die Federzunge und deren anderer Schenkel (5') die Öffnungsfeder ist (s. auch FIG. 2C und FIG. 2D.)

FIG.2C zeigt
eine isometrische Darstellung der Anordnung gemäß FIG.2A bzw. FIG.2B mit Blick schräg von unten in das Aufnahme-Gehäuse 1';

FIG.2D zeigt
eine isometrische Einzel-Darstellung der zweischenkligen Blattfeder (5'/9').

Der Scheitel der Blattfeder (5'/9') ist im Aufnahme-Gehäuse 1' formschlüssig fixiert.
Die zweischenklige Blattfeder (5'/9') kann auch durch zwei Einzel-Blattfedern ersetzt werden.

FIG. 2G zeigt
eine isometrische Darstellung des Aufnahme-Gehäuses 1' gemäß FIG. 2A mit Blick auf die Rückseite.

FIG. 2E zeigt
eine isometrische Darstellung der zweiten Ausführungsform der erfindungsgemäßen Befestigungsanordnung , wobei das Schub-Element 4' völlig in das Aufnahme-Gehäuse 1' hineingeschoben ist.

FIG.3A zeigt
eine isometrische Darstellung Aufnahme-Gehäuses 1 " (für das Einschub-Element 4") für eine dritte Ausführungsform der erfindungsgemäßen Befestigungs-Anordnung (mit Blick auf die Vorderseite des Aufnahme-Gehäuses).

FIG.3B zeigt
eine isometrische Darstellung des Schub-Elemntes 4 " (mit Blick auf seine Rückseite) für die dritte Ausführungsform der erfindungsgemäßen Befestigungs-Anordnung.

FIG.3C zeigt
eine isometrische Darstellung des Schub-Elemntes 4" (mit Blick auf seine Rückseite) gemäß FIG.3B unter Einbeziehung einer U förmigen Halte-Feder C2 und einer Spiral-Druckfeder 5" als Öffnungs-Feder.

FIG.3D zeigt
eine Schnittdarstellung des teilweise in das Aufnahme-Gehäuse 1" gemäß FIG.3A eingeführten Schub-Elementes 1 " gemäß FIG. 3C mit Blick auf die U förmige Halte-Feder C2 als Verbindungselement zum Halte-Bolzen P.

Diese dritte Ausführungsform der erfindungsgemäßen Befestigungs-Anordnung unterscheidet sich von der ersten und zweiten Ausführungsform bezüglich der Rastverbindung zwischen dem Schub-Element 4" und dem Aufnahme-Gehäuse 1", und der Öffnungsfeder 5".

Gemäß FIG. 3A wird die Rastverbindung zwischen Aufnahme-Gehäuse 1" und Schub-Element 4" von einer im Aufnahme-Gehäuse 1" angeordneten Kunststoff-Federzunge 9 " mit Rastnase 10" gebildet , welche in einer entsprechende Aussparung 19" des Schub-Elements 4" einrastet.
Das freie Ende dieser Federzunge 9 " kann analog zur Federzunge 9' im der zweiten Ausführungsform (gemäß FIG. 2F) manuell zum Lösen der Rastverbindung betätigt werden.

Zwischen den Stutzen 17" (FIG.3A) im Aufnahme-Gehäuse 1" und 18" (FIG.3B) im Schub-Element 1" ist eine Spiral-Druckfeder 5" als Öffnungsfeder abgeordnet. Durch ihre Kraft wird das Schub- Element 4" aus dem Aufnahme-Gehäuse 1" gedrückt, wenn die Rastverbindung gelöst ist.

Als Verbindungs-Element zwischen Schub-Element 4 "/ Gehäuse 1" und dem Haltebolzen P ist eine eine U-förmig-ähnliche Drahtfeder C2 vorgesehen, welche im Schubelement 4 " derart angeordnet ist, daß deren Schenkel C2-1, C2-2 bei Einschieben des Schubelementes 4" in das Aufnahme-Gehäuse 1" beidseits des Haltebolzens P vorbeiführbar sind, wobei sich diese Schenkel durch eine im Aufnahme-Schacht 1 " angeordnete sich verengende Führung G (FIG. 3D) zwangsweise nähern, bis die beidseits des Haltebolzens P befindlichen Bereiche der Schenkel C2-1, C2-2 in die Aussparung R des Haltebolzens P eingreifen.

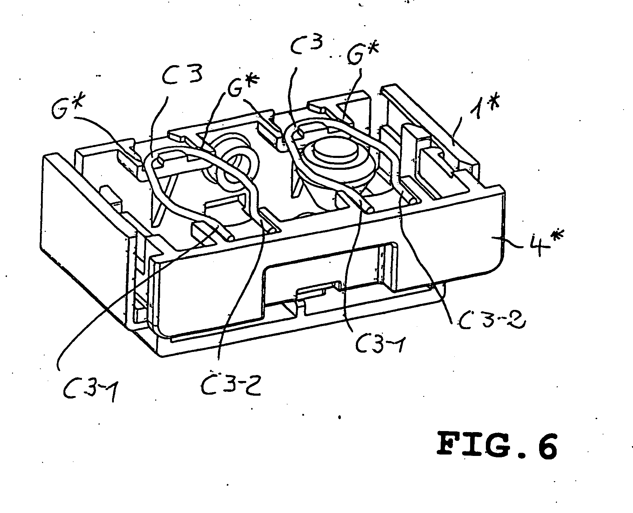

FIG.6 zeigt
eine Schnittdarstellung des teilweise in das Aufnahmeeingeführten Schub-Elementen analog zu FIG. 3D mit einer anders als in FIG. 3D angeordneten und ausgebildeten U förmigen Draht-Feder C3 als Verbindungselement zum Haltebolzen.
Diese Draht-Feder ist im Aufnahme-Gehäuse 1* derart angeordnet, daß deren Schenkel C3-1, C3-2 beidseits des Haltebolzens P und von diesem beabstandet angeordnet sind. Beim Einschieben des Schub-Elementes 4* in das Aufnahme-Gehäuse 1* nähern sich diese Schenkel C3-1, C3-2 durch eine im Aufnahme-Gehäuse 1* angeordnete und sich verengende Zwangsführung G*, bis die beidseits des Haltebolzens P befindlichen Bereiche der Schenkel C3-1, C3-2 in die Aussparung R des Haltebolzens P eingreifen.
Die Zwangsführung G (FIG. 3D) bzw. die Zwangsführung G* (FIG.6) im Aufnahme-Gehäuse kann durch eine zusätzliche Zwangsführung im Schub-Element 4" ergänzt werden.

Die U-förmig-ähnliche Drahtfeder C2 (FIG.3D) oder C3(FIG.6) kann zusätzlich zu ihrer Verbindungsfunktion mit dem Haltebolzen auch als Öffnungsfeder wirken, welche das Schub-Element bei gelöster Rastverbindung des Schub-Elementen mit dem Aufnahme-Gehäuse aus dem Aufnahme-Gehäuse schiebt.
Diese Möglichkeit resultiert aus einer in Öffnungsrichtung wirkenden Kraftkomponente an der schräg verlaufenden Zwangsführung.

Aus Vereinfachungsgründen wurde in den FIG.3C und 3D auf die Darstellung einer zweiten U-förmig-ähnliche Drahtfeder in der rechten Hälfte des Schuh-Elementes 4" bzw. des Aufnahme-Gehäuses 1* verzichtet.

In allen Ausführungsformen der erfindungsgemäßen Befestigungsanordnung ist die Herausbewegung des Schub-Blementes 4" aus dem Aufnahme-Gehäuse 1" durch einen Anschlag begrenzt.
Hierfür ist in der Wandung des Aufnahme-Gehäuse 1 " eine Führungsnut 11" für eine im Schub-Element 4" angeordnete Federnase 12" vorgesehen (FIG. 3A und 3B), für die das Nutende 11"-E einen Anschlag bildet.
Das Aufnahme-Gehäuse kann entweder nur eine einzige Öffnung zum Hineinführen des Teils des Haltebolzens P mit der Aussparung R in das Aufnahme-Gehäuse oder auch mehrere Öffnungen (2,2',2"; 3,3',3") aufweisen, in die wahlweise der Haltebolzen eingeführt werden kann. Hierdurch können unterschiedlich geforderte Randabstände bei den Bauteilen berücksichtigt werden ( gemeint ist der Abstand vom Bauteilrand, in welchem die Aufnahme-Gehäuse zu befestigen sind).
Die erfindungsgemäße Befestigungsanordnung findet vorzugsweise Anwendung für das Anbringen von Decken- oder Wandverkleidungen in Flugzeugen. Beim Anbringen von Verkleidungen sind mehrere randwärts anzubringende Befestigungsanordnungen erforderlich.

Aus Gewichtsgründen können das Aufnahme-Gehäuse und das Schub-Element aus Kunststoff, vorzugsweise aus Polyetherimid hergestellt werden.

## Patentansprüche

1. Anordnung zur lösbaren Befestigung eines Bauteils (X) an einer Decke (Y) oder Wand ,
**dadurch gekennzeichnet,**
**daß** ein mit dem Bauteil (X) verbindbares Aufnahme-Gehäuse (1,1',1") mit einer Einführ-Öffnung (O, O',O") zur Aufnahme eines Schub-Elements (4,4',4") vorgesehen ist,
**daß** das Aufnahme-Gehäuse (1,1',1") mindestens eine Öffnung (2,2',2"; 3,3',3") zum Hineinführen eines gedachten Haltebolzens (P) mit einer Aussparung (R) in das Aufnahme-Gehäuse (1,1',1") aufweist,
**daß** im Schub-Element (4,4',4") ein Verbindungselement (C1, C2) oder im Aufnahme-Gehäuse ein Verbindungs-Element (C3) angeordnet ist, welches im eingeschobenen Zustand des Schub-Elementes (4,4',4") im Aufnahme-Gehäuse (1,1',1") in die Aussparung (R) des Haltebolzens (P) eingreift,
**daß** das Schub-Element (4,4',4 ") im eingeschobenen Zustand durch eine lösbare Rastverbindung im Aufnahme-Gehäuse (1,1',1") fixiert ist,
und **daß** eine Öffnungs-Feder (5,5',5", C2,C3) vorgesehen ist, durch welche das Schub-Element (4,4',4") aus dem eingeschobenen Zustand in eine geöffnete Position verschiebbar ist, sobald die Rastverbindung gelöst ist.

2. Anordnung nach Anspruch 1,
**dadurch gekennzeichnet,**
**daß** die Aussparung (R) im Haltebolzen (P) durch zwei seitliche gegenüberstehende Kerben oder eine konzentrische Haltenut gebildet wird, und
**daß** das Verbindungselement (C1) einen offenen Schlitz (6) aufweist, dessen Ränder (6-1, 6-2) in die Aussparung (R) des Haltebolzens (P) einführbar sind.

3. Anordnung nach Anspruch 1,
**dadurch gekennzeichnet, daß**
das Verbindungselement eine U-förmig-ähnliche Drahtfeder (C2) ist, welche im Schub-Element (4") derart angeordnet ist, daß deren Schenkel (C2-1, C2-2) beim Einschieben des Schub-Elementen (4") in das Aufnahme-Gehäuse (1") beidseits des Haltebolzens (P) vorbeiführbar sind, wobei sich diese Schenkel durch eine im Aufnahme-Gehäuse (1 ") angeordnete sich verengende Zwangs-Führung (G) nähern, bis die beidseits des Haltebolzens (P) befindlichen Bereiche der Schenkel (C2-1, C2-2) in die Aussparung (R) des Haltebolzens (P) eingreifen.

4. Anordnung nach Anspruch 1,
**dadurch gekennzeichnet,**
**daß** das Verbindungsselement (C3) eine U-förmig-ähnliche Drahtfeder ist,
welche im Aufnahme-Gehäuse (1*) derart angeordnet ist, daß deren Schenkel (C3-1, C3-2) beidseits des Haltebolzens (P) und von diesem beabstandet angeordnet sind,
wobei sich diese Schenkel (C3-1, C3-2) beim Einschieben des Schub-Elementen (4*) in das Aufnahme-Gehäuse (1*) durch eine im Aufnahme-Gehäuse (1*) angeordnete und sich verengende Zwangsführung (G*) nähern, bis die beidseits des Haltebolzens (P) befindlichen Bereiche der Schenkel (C3-1, C3-2) in die Aussparung (R) des Haltebolzens (P) eingreifen.

5. Anordnung nach Anspruch 3 oder 4,
**dadurch gekennzeichnet, daß** die
U-förmig-ähnliche Drahtfeder (C2, C3) zugleich die Öffnungsfeder ist, welche das Schub-Element bei gelöster Rastverbindung des Schub-Elementes mit dem Aufnahme-Gehäuse aus dem Aufnahme-Gehäuse schiebt.

6. Anordnung nach Anspruch 1,
**dadurch gekennzeichnet,**
**daß** die Rastverbindung zwischen Aufnahme-Gehäuse (1) und Schub-Element (4) mittels am Schub-Element (4) (bzw. am Aufnahme-Gehäuse) angeordneter federnder Rastnasen (7) erfolgt, welche in Durchgangsöffnungen (8) der Aufnahme-Gehäuse (1)-Wandung ( bzw. Aussparungen des Schub-Elementes) einrasten.

7. Anordnung nach Anspruch 1,
**dadurch gekennzeichnet,**
**daß** die Rastverbindung zwischen Aufnahme-Gehäuse (1',1") und Schub-Element(4', 4") mittels einer im Aufnahme-Gehäuse (1', 1") angeordneten Federzunge (9', 9") mit Rastnase (10', 10") erfolgt, welche im eingeschobenen Zustand in einer Aussparung (11', 19") des Schub-Elemente (4', 4") einrastet.

8. Anordnung nach Anspruch 7,
**dadurch gekennzeichnet,**
**daß** das freie Ende (E') der Federzunge (9') zum Lösen der Rastverbindung für eine manuelle Betätigung in eingeschobenen Zustand zugänglich ist.

9. Anordnung nach Anspruch 7 oder 8,
**dadurch gekennzeichnet, daß** die Federzunge (9', 9 ") aus Kunststoff oder Federstahl ist.

10. Anordnung nach Anspruch 1,
**dadurch gekennzeichnet,**
**daß** die Öffnungs-Feder eine am Schub-Element (4) angeordnete Blattfeder (5) ist, deren Federarm im eingeschobenen Zustand ein im Aufnahme-Gehäuse (1) angeordnetes Widerlager federkraftmäßig beaufschlagt.

11. Anordnung nach Anspruch 1,
**dadurch gekennzeichnet, daß** die Öffnungs-Feder eine im Aufnahme-Gehäuse (1') angeordnete Blattfeder (5') ist, die im eingeschobenen Zustand das Schub-Element (4') in Öffnungsrichtung (D') federkraftmäßig beaufschlagt.

12. Anordnung nach Anspruch 9 und 11,
**dadurch gekennzeichnet, daß**
eine zweischenkelige Blattfeder (5',/9') aus Federstahl vorgesehen ist, deren einer Schenkel (9') die Federzunge und deren anderer Schenkel (5') die Öffnungsfeder bildet,
wobei der Scheitel der Blattfeder (5'/9') im Aufnahme-Gehäuse (1') formschlüssig fixiert ist.

13. Anordnung nach Anspruch 1,
**dadurch gekennzeichnet, daß** die
Öffnungs-Feder eine Spiral-Druckfeder (5 ") ist, welche zwischen Aufnahme-Gehäuse (1") und Schubelement (4") angeordnet ist und welche im eingeschobenen Zustand das Schub-Element (4") in Öffnungsrichtung beaufschlagt.

14. Anordnung nach einem der Ansprüche 1 bis 13,
**dadurch gekennzeichnet, daß**
die Herausbewegung des Schub-Elementen (4, 4', 4") aus dem Aufnahme-Gehäuse (1, 1', 1") durch einen Anschlag begrenzt ist.

15. Anordnung nach Anspruch 14,
**dadurch gekennzeichnet, daß**
im Aufnahme-Gehäuse (1") eine Führungsnut (11") für eine im Schub-Element (4") angeordnete Federnase (12") vorgesehen ist, für die das Nutende (11 "-E) einen Anschlag bildet.

16. Anordnung nach einem der Ansprüche 1 bis 15,
**dadurch gekennzeichnet, daß**
der Haltebolzen (P) mit der Decke (Y) oder Wandung über einen Schwingungsdämpferring (13, 13') verbunden ist.

17. Anordnung nach einem der Ansprüche 1 bis 16,
**dadurch gekennzeichnet,**
**daß** der Haltebolzen (P) im oberen Schaftbereich von einem Schwingungsdämpferring (13) umgeben ist, welcher eine aüßere konzentrische Ringnut (13-1) aufweist,
**daß** der Schwingungsdämpferring (13) in einem hohlzylinderähnlichen Einsatz (14) angeordnet ist,
**daß** dieser Einsatz (14) einen ringförmigen Innenvorsprung (14-1) aufweist, welcher in der Ringnut (13-1) des Schwingungsdämpferringes (13) angeordnet ist und daß das aus dem Einsatz (14) herausstehende Ende des Haltebolzens eine Aussparung (R) zum Einrasten eines gedachten Verbindungs-Elementes aufweist.

18. Anordnung nach einem der Ansprüche 1 bis 16,
**gekennzeichnet durch**
einen Haltebolzen (P) mit einem Bolzenkopf (H'), auf dem im oberen Schaftbereich zwischen dem Bolzenkopf (H') und einem auf dem Haltebolzen (P) anordnungsbaren Sicherungselement (19') ein Schwingungsdämpferring (13') mit einer oberen (17') und einer unteren (18') Haltescheibe angeordnet ist,
wobei der Schwingungsdämpferring (13') eine aüßere konzentrische Ringnut (13-1') aufweist,
in der ein gedachter ringförmiger Innenvorsprung einer in einer Decke oder Wandung befindlichen Bohrung zur Aufnahme des Schwingungsdämpferringe anordnungsbar ist,
und daß das aus dem Schwingungsdämpferring (13') herausstehende Ende des Haltebolzens (P) eine Aussparung (R) zum Einrasten eines gedachten Verbindungs-Elementes aufweist.

19. Anordnung nach Anspruch 18,
**dadurch gekennzeichnet,**
**daß** das Sicherungselement (19') eine Sicherungsscheibe ist.

## Claims

1. Arrangement for fixing a component (X) detachably to a ceiling (Y) or wall,
**characterised in**
**that** a seat housing (1,1', 1") for connection with the component (X) is provided with an insertion opening (O, O', O") for receiving a plug-in element (4, 4', 4"),
**that** the seat housing (1,1', 1") has at least one opening (2,2', 2", 3,3', 3") for inserting an imaginary retaining bolt (P) with a recess (R) into the seat housing (1,1', 1"),
**that** a connecting element (C1, C2) is located in the plug-in element (4, 4', 4"), or a connecting element (C3) is located in the seat housing, which, when the plug-in element (4, 4', 4") is inserted in the seat housing (1,1', 1") engages in the recess (R) of the retaining bolt (P),
**that**, in the inserted state, the plug-in element (4, 4', 4") is fixed in the seat housing (1,1', 1") by a releasable lock-in connection,
and **that** an opening spring (5,5', 5", C2, C3) is provided through which the plug-in element (4, 4', 4") is moved from the inserted into the open position when the lock-in connection is released.

2. Arrangement according to claim 1,
**characterised in**
**that** the recess (R) in the retaining bolt (P) is formed by two lateral opposing notches or a concentric retaining groove, and
**that** the connecting element (C1) has an open slit (6) whose edges (6-1, 6-2) can be inserted into the recess (R) of the retaining bolt (P).

3. Arrangement according to claim 1,
**characterised in**
**that** the connecting element is a wire spring (C2) similar to a U in shape, which is arranged in the plug-in element (4") in such a way that its sides (C2-1, C2-2) are guided past both sides of the retaining bolt (P) when the plug-in element (4") is pushed into the seat housing (1"), whereby these sides are forced to approach one another by a narrowing guide (G) located in the seat housing (1") until the parts of the sides (C2-1, C2-2) on either side of the retaining bolt (P) engage the recess (R) of the retaining bolt (P).

4. Arrangement according to claim 1,
**characterised in**
**that** the connecting element (C3) is a spring similar in shape to a U, which is arranged in the seat housing (1*) in such a way that its sides (C3-1, C3-2) are located on either side of retaining bolt (P) at a distance therefrom, whereby when the plug-in element (4*) is pushed into the seat housing (1*), these sides (C3-1, C3-2) approach one another through a narrowing guide (G*) located in the seat housing (1*), until the parts of the sides (C3-1, C3-2) on either side of the retaining bolt (P) engage the recess (R) of the retaining bolt (P).

5. Arrangement according to claim 3 or claim 4,
**characterised in**
**that** the wire spring (C2, C3) similar in shape to a U, is also the opening spring which pushes the plug-in element out of the seat housing when the lock-in connection between the plug-in element and the seat housing is released.

6. Arrangement according to claim 1,
**characterised in**
**that** the lock-in connection between the seat housing (1) and the plug-in element (4) is achieved by spring-loaded locking tappets (7) located on the plug-in element (4) (or the seat housing), which lock into through holes (8) in the wall of the seat housing (1) (or recesses in the plug-in element).

7. Arrangement according to claim 1,
**characterised in**
**that** the lock-in connection between the seat housing (1', 1") and the plug-in element (4', 4"), is achieved by a spring tongue (9', 9") with a locking tappet (10', 10") located in the seat housing (1', 1") which, in the inserted position, locks into a recess (11', 19") of the plug-in element (4', 4") .

8. Arrangement according to claim 7,
**characterised in**
**that**, in the inserted state, the free end (E') of the spring tongue (9') is accessible for manual operation in order to release the lock-in connection.

9. Arrangement according to claim 7 or claim 8,
**characterised in**
**that**, the spring tongue (9', 9") is made either of plastic or spring steel.

10. Arrangement according to claim 1,
**characterised in**
**that** the opening spring is a leaf spring (5) located on the plug-in element (4) whose spring arm, in the inserted state, exerts pressure by spring force on an abutment located in the seat housing (1).

11. Arrangement according to claim 1,
**characterised in**
**that** the opening spring is a leaf spring (5') located in the seat housing (1'), which, in the inserted state, exerts pressure in opening direction (D') on the plug-in element (4').

12. Arrangement according to claim 9 and claim 11,
**characterised in**
**that** a two-sided leaf spring (5' / 9') of spring steel is provided, one of whose sides (9') is formed by the spring tongue and the other (5') by the opening spring, where the crown of the leaf spring (5' / 9') is fixed by positive fit in the seat housing (1').

13. Arrangement according to claim 1,
**characterised in**
**that** the opening spring is a spiral pressure spring (5") located between the seat housing (1") and plug-in element (4") and which, in the inserted state, exerts pressure on the plug-in element (4") in opening direction.

14. Arrangement according to claims 1 to 13,
**characterised in**
**that** the outward movement of the plug-in element (4, 4', 4") out of the seat housing (1, 1', 1") is restricted by a stop.

15. Arrangement according to claim 14,
**characterised in**
**that** a guide groove (11") for a spring tappet (12") located in the plug-in element (4") is provided in the seat housing (1"), for which the end of the groove (11"-E) forms a stop.

16. Arrangement according to one of the claims 1 to 15,
**characterised in**
**that** the retaining bolt (P) is joined to the ceiling (Y) or wall via a vibration-damping ring (13, 13').

17. Arrangement according to one of the claims 1 to 16,
**characterised in**
**that** the upper area of the shaft of the retaining bolt (P) is surrounded by a vibration-damping ring (13) with an outer concentric ring groove (13-1),
**that** the vibration-damping ring (13) is located in a hollow-cylinder-shaped insert (14),
**that** this insert (14) has a ring-shaped interior projection (14-1) which is located in the ring groove (13-1) of the vibration-damping ring (13) and
**that** the end of the retaining bolt projecting from the insert (14) has a recess (R) into which an imaginary connecting element can lock.

18. Arrangement according to one of the claims 1 to 16
**characterised by**
a retaining bolt (P) with a bolt head (H') on which, in the upper area of the shaft between the bolt head (H') and a securing element (19') located on the retaining bolt (P), a vibration-damping ring (13') with an upper retaining disk (17') and a lower retaining disk (18') is located,
where the vibration-damping ring (13') has an outer concentric ring groove (13-1') in which an imaginary ring-shaped interior projection of a hole in a ceiling or wall is located for receiving the vibration-damping ring, and that the end of the retaining bolt (P) projecting from the vibration-damping ring (13') has a recess (R) for locking an imaginary connecting element into position.

19. Arrangement according to claim 18,
**characterised in**
**that** the securing element (19') is a locking disk.

## Revendications

1. Dispositif pour la fixation amovible d'un élément (X) sur un plafond (Y) ou un mur, **caractérisé en ce que**
il est prévu un boîtier de logement (1, 1', 1") pouvant être assemblé avec l'élément (X) et doté d'une ouverture d'insertion (O, O', O") destinée à recevoir un élément de poussée (4, 4", 4"),
**en ce que** le boîtier de logement (1, 1', 1") présente au moins une ouverture (2.2', 2" ; 3.3', 3") pour l'insertion d'un boulon de maintien (P) imaginaire avec un évidement (R) dans le boîtier de logement (1, 1', 1"),
**en ce qu'**il est prévu dans l'élément de poussée (4, 4', 4") un élément d'assemblage (C1, C2) ou dans le boîtier de logement un élément d'assemblage (C3), qui se met en prise, quand l'élément de poussée (4, 4' ,4") est enfoncé dans le boîtier de logement (1, 1', 1"), dans l'évidement (R) du boulon de maintien (P),
**en ce que** l'élément de poussée (4, 4', 4"), dans l'état enfoncé, est fixé par un assemblage emboîté pouvant être défait dans le boîtier de logement (1, 1', 1 "),
et **en ce qu'**il est prévu un ressort d'ouverture (5, 5', 5", C2, C3) par lequel l'élément de poussée (4, 4', 4") peut être poussé de l'état enfoncé à une position ouverte dès que l'assemblage emboîté est défait.

2. Dispositif selon la revendication 1, **caractérisé en ce que** l'évidement (R) dans le boulon de maintien (P) est formé par deux encoches latérales se faisant face ou une gorge de rétention concentrique, et
**en ce que** l'élément d'assemblage (C1) présente une fente ouverte (6) dont les bords (6-1, 6-2) peuvent être introduits dans l'évidement (R) du boulon de maintien (P).

3. Dispositif selon la revendication 1, **caractérisé en ce que** l'élément d'assemblage est un ressort en fil en forme de U approximative (C2), disposé dans l'élément de poussée (4") de telle manière que ses bras (C2-1, C2-2) puissent, lors de l'insertion de l'élément de poussée (4") dans le boîtier de logement (1"), être guidés de part et d'autre du boulon de maintien (P), ces bras se rapprochant sous l'effet d'un guidage forcé (G) disposé dans le boîtier de logement (1") et qui se resserre, jusqu'à ce que les parties des bras (C2-1, C2-2) situées de part et d'autre du boulon de maintien (P) se mettent en prise dans l'évidement (R) du boulon de maintien (P).

4. Dispositif selon la revendication 1, **caractérisé en ce que** l'élément d'assemblage (C3) est un ressort en fil en forme de U approximative, qui est disposé dans le boîtier de logement (1*) de telle façon que ses bras (C3-1, C3-2) soient disposés de part et d'autre du boulon de maintien (P) et à distance de celui-ci, ces bras (C3-1, C3-2) se rapprochant, lorsque l'élément de poussée (4*) est enfoncé dans le boîtier de logement (1*), sous l'effet d'un guidage forcé (G*) disposé dans le boîtier de logement (1*) et se resserrant, jusqu'à ce que les parties des bras (C3-1, C3-2) situées de part et d'autre du boulon de maintien (P) se mettent en prise dans l'évidement (R) du boulon de maintien (P).

5. Dispositif selon la revendication 3 ou 4, **caractérisé en ce que** le ressort en fil en forme de U approximative (C2, C3) est en même temps le ressort d'ouverture qui pousse l'élément de poussée hors du boîtier de logement quand l'assemblage emboîté de l'élément de poussée avec le boîtier de logement est défait.

6. Dispositif selon la revendication 1, **caractérisé en ce que** l'assemblage emboîté entre le boîtier de logement (1) et l'élément de poussée (4) est réalisé au moyen d'ergots d'emboîtement (7) disposés sur l'élément de poussée (4) (ou sur le boîtier de logement), qui s'engagent dans des ouvertures de passage (8) dans la paroi du boîtier de logement (1) (ou des évidements de l'élément de poussée).

7. Dispositif selon la revendication 1, **caractérisé en ce que** l'assemblage emboîté entre le boîtier de logement (1', 1") et l'élément de poussée (4', 4") est réalisé au moyen d'une languette de ressort (9', 9") disposée dans le boîtier de logement (1', 1*) avec un ergot d'emboîtement (10', 10") qui se met en prise, dans l'état enfoncé, dans un evidement (11', 19") due l'élément de poussée (4', 4").

8. Dispositif selon la revendication 7, **caractérisé en ce que** extrémité libre (E') de la languette de ressort (9') est accessible dans l'état enfoncé pour défaire l'assemblage emboîté par un actionnement manuel.

9. Dispositif selon la revendication 7 ou 8, **caractérisé en ce que** la languette de ressort (9', 9") est faite de matière plastique ou d'acier à ressorts.

10. Dispositif selon la revendication 1, **caractérisé en ce que** le ressort d'ouverture est un ressort à lames (5) disposé sur l'élément de poussée (4), dont le bras de ressort exerce une force de ressort sur un contre-appui disposé dans le boîtier de logement (1) dans l'état enfoncé.

11. Dispositif selon la revendication 1, **caractérisé en ce que** le ressort d'ouverture est un ressort à lames (5') disposé dans le boîtier de logement (1'), qui exerce une force de ressort dans le sens de l'ouverture (D') sur l'élément de poussée (4') dans l'état enfoncé.

12. Dispositif selon la revendication 9 et 11, **caractérisé en ce qu'**il est prévu un ressort à lames à deux bras (5'/9') en acier à ressorts, dont un bras (9') forme la languette de ressort et l'autre bras (5') le ressort d'ouverture, dans lequel le sommet du ressort à lames (5'/9') est fixé par engagement positif dans le boîtier de logement (1').

13. Dispositif selon la revendication 1, **caractérisé en ce que** le ressort d'ouverture est un ressort hélicoïdal de compression (5") qui est disposé entre le boîtier de logement (1") et l'élément de poussée (4") et qui contraint l'élément de poussée (4") dans le sens de l'ouverture dans l'état enfoncé.

14. Dispositif selon l'une des revendications 1 à 13, **caractérisé en ce que** la sortie de l'élément de poussée (4, 4', 4") hors du boîtier de logement (1, 1', 1") est limitée par une butée.

15. Dispositif selon la revendication 14, **caractérisé en ce qu'**il est prévu dans le boîtier de logement (1") une gorge de guidage (11") pour un ergot de ressort (12") disposé dans l'élément de poussée (4"), pour lequel l'extrémité de la gorge (11 "-E) forme une butée.

16. Dispositif selon l'une des revendications 1 à 15, **caractérisé en ce que** le boulon de maintien (P) est relié au plafond (Y) ou à la paroi par l'intermédiaire d'une bague d'amortissement des vibrations (13, 13').

17. Dispositif selon l'une des revendications 1 à 16, **caractérisé en ce que** le boulon de maintien (P) est entouré dans la partie supérieure du corps par une bague d'amortissement des vibrations (13) qui présente une gorge annulaire extérieure (13-1) concentrique, **en ce que** la bague d'amortissement des vibrations (13) est disposée dans un insert (14) en forme de cylindre creux, **en ce que** cet insert (14) présente une saillie intérieure annulaire (14-1) qui est disposée dans la gorge annulaire (13-1) de la bague d'amortissement des vibrations (13), et **en ce que** l'extrémité du boulon de maintien dépassant de l'insert (14) présente un évidement (R) pour l'engagement d'un élément d'assemblage imaginaire.

18. Dispositif selon l'une des revendications 1 à 16, **caractérisé en ce qu'**il comporte un boulon de maintien (P) avec une tête de boulon (H') sur lequel est disposée dans la partie supérieure du corps, entre la tête de boulon (H') et un élément de fixation (19') pouvant être disposé sur le boulon de maintien (P), une bague d'amortissement des vibrations (13') comprenant une plaque de maintien supérieure (17') et une autre inférieure (18'), laquelle bague d'amortissement des vibrations (13') présente une gorge extérieure (13-1') concentrique dans laquelle une saillie intérieure annulaire imaginaire d'un trou percé dans le plafond ou la paroi peut être disposée pour recevoir la bague d'amortissement des vibrations, et **en ce que** l'extrémité du boulon de maintien (P) dépassant de la bague d'amortissement des vibrations (13') présente un évidement (R) pour l'engagement d'un élément d'assemblage imaginaire.

19. Dispositif selon la revendication 18, **caractérisé en ce que** l'élément de fixation (19') est une plaque de fixation.
